# EUROPEAN PATENT SPECIFICATION

(11) **EP 2 330 318 B1**
(45) Date of publication and mention of the grant of the patent: **01.05.2013**
(21) Application number: 09813298.8
(22) Date of filing: 09.09.2009
(51) Int. Cl.: F16H 19/04, F16H 29/12, F16H 1/00, F16H 3/00

(54) **DEVICE FOR CONVERTING OSCILLATORY MOTION INTO UNIDIRECTIONAL ROTATIONAL MOTION**
VORRICHTUNG ZUR UMWANDLUNG VON SCHWINGBEWEGUNGEN IN UNIDIREKTIONALE DREHBEWEGUNGEN
TRANSFORMATION DE MOUVEMENT EN VA-ET-VIENT EN UN MOUVEMENT ROTATIF UNIDIRECTIONNEL

(30) Priority: 15.09.2008 RU 2008137040
(43) Date of publication of application: 08.06.2011
(73) Proprietor: Limited Liability Company MERS, Ekaterinburg 620012 (RU)
(72) Inventor: KOLOKOLNIKOV, Igor Evgenyevich, Ekaterinburg 620131 (RU)
(74) Representative: Sloboshanin, Sergej
(86) International application number: PCT/RU2009/000461
(87) International publication number: WO 2010/030210

(56) References cited:
- CH-A- 274 027
- DE-A1- 19 700 292
- DE-B- 1 107 040
- FR-A5- 2 211 087
- GB-A- 606 683
- RU-C2- 2 239 739
- SU-A1- 247 735
- US-A- 2 688 887
- KOZHEVNIKOV S.N. ET AL.: '"Mekhanizmi", Spravochnoe posobie, Izdanie chetvertoe, pererabotannoe i dopolnennoe, M.' MASCHINOSTROENIE 1976, pages 223 - 225, XP008144800

## Description

### Field of invention

The invention is related to a device for converting reciprocating rotary motion into unidirectional rotation motion according to claim 1. The invention can be used, for instance, in lifting devices, electric power generators, machine-tools, pumps, transport facilities, and particularly in internal-combustion engines.

### Prior art

Known devices for converting motion are used, for example, in lifting devices, especially in winches (RU 2045469, SU 929535). The main disadvantage of these devices is the idling, which leads to a decrease in the efficiency of applied forces.

A device for converting motion is known from SU 812703, which contains two separate spools on which a hawser is inversely wound, leading to an increasing of number of components and size of the device.

DE 197 00 292 A1 which constitutes the closest prior art, discloses a two-speed gear having an input shaft and an output shaft linked by gear wheels with different numbers of teeth to deliver different output ratios, wherein the drive input shaft has a first and a second input gear wheels which are permanently interlocked with a first and a second power output gear wheels, wherein the first input gear wheel or the first power output gear wheel and the second drive output gear have contra-rotating freewheeling mechanisms.

RU 2 239 739 discloses a device for converting reciprocating rotary motion, and consists of a frame body and input and output axles located on one axle.

The disadvantage of this device is the rigidly fixed limited angle of rotation of the input axle from one point to another, so that the device is functional only when the input axle is rotated from one point to another by a certain angle. If the device stops at one of these two points, then it will not be able to rotate the input axle to run the device, since the crank buttons will be deadlocked.

When using the device in an internal combustion engine and the engine pulse fails in at least one of the cylinders, the engine will break down because the inert flywheel of the output axle will pull the input axle to rotate in the same direction, instead of the necessary reverse motion. Herewith, the cylinder piston will strike the combustion head.

At the rotation of the input axle from one point to another, the angular speed of the output axle will match the speed of input axle, and during the reverse rotation of the input axle, the angular rate of rotation of the output axle will be nonlinear (that is, at the beginning, it will be slowing and then accelerating relative to the speed of input axle).

When using the specified known device in internal-combustion engines, in which an inertial flywheel is installed on the output axle in order to smooth uneven motions, the unevenness of the angular rates influences the velocities of the elements of the input axle and this, in turn, leads to an unevenness in movement of piston group that will unbalance the engine and cause it to shake.

### Invention disclosure

The task to be solved by this solution is to increase the efficiency of the device by converting the rotation on the input axle with unlimited angle of rotation in either direction into unidirectional rotation of the output axle.

The problem is solved as follows.
The device for converting of reciprocating rotary motion into rotation, that comprises a body frame with input and output axles, according to the invention, includes at least one intermediate axle installed in the body frame perpendicular to the input axle, with at least two rotation transmitting coupling elements in the form of a free-wheel clutch and ratchet clutch rigidly mounted on the output axle with the possibility of mutually opposite rotational action, and at least three interconnected rotation transmitting elements rigidly mounted between the coupling elements so as to also be capable of mutually opposite rotation for transmitting the rotation of the output axle in one direction.

One of the rotation transmitting elements is rigidly installed on the intermediate axle, and two others are rigidly interconnected with coupling elements. The rotation transmitting element is carried out in the form of conical gear. Axles are used as the input, output and intermediate axles.

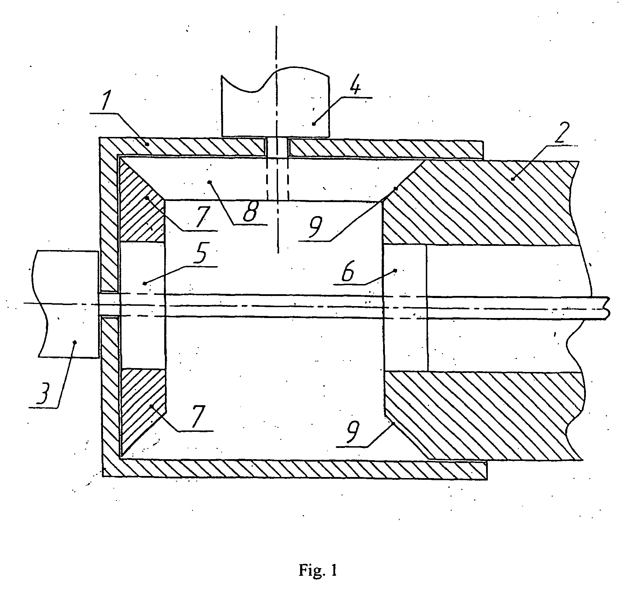

Fig. 1 is the present device, general view, longitudinal section.
Fig. 2 is an example of the claimed device used in an internal combustion engine.

### Example embodiment

The device contains stationary frame 1, the walls of which have holes used for the installation of input axle 2, located on the same axis as output axle 3. The device also contains an intermediate axle 4 mounted perpendicularly to an output axle 3. Axles are used as the input, output and intermediate axles.

The device contains at least one input axle 2. Additionally, the device may contain one or two output axles 3. The input 2 and output 3 axles can be mounted on the same common axis or can be installed perpendicular to each other.

On the output axle 3, two coupling elements 5 and 6 are rigidly mounted with the possibility of mutually opposite rotational action for transmitting the rotation in one direction, t ratchets or free-wheel clutches being used as the coupling elements. (Applied mechanics. Study guide for higher education. Ed. by O.E.Oseckiy. Iss. 2, "Mashinostrojenije", 1977, 458 p.). Input axle 2 is rigidly mounted on coupling element 6, and coupling element 5 is rigidly installed on output axle 3. Input axle 2 rolls around freely in body frame 1. The device also contains the rotation transmitting elements 7, 8, 9. The rotation transmitting element 7 is rigidly mounted on coupling element 5 and forms a rotational pair with rotation transmitting element 8 rigidly mounted on intermediate axle 4. The rotation transmitting element 8, in turn, transmits the rotation to the rotation transmitting element 9, installed on the input axle 2, which is rigidly interconnected with the coupling element 6.

Intermediate axle 4 is used as a free axle for installing a conical rotation transmission element 8.

In this case, the speed of rotation of the output axle 3 is equal to the speed of rotation of the input axle 2 independent of the magnitude of the transmission coefficient of rotation transmitting element 8.

A variant of the active use of the intermediate axle 4 as an input axle is possible. In this case, depending on the size of the diameter of the rotation transmitting element 8, which affects the transmission coefficient, the angular speed rate of output axle 3 will change relative to the intermediate axle 4.

Device operates as follows.
Input axle 2, rigidly planted on the coupling element 6, rotates clockwise and passes the rotation through the coupling element 6 to the output axle 3. At that, the rotation is transmitted via conical rotation transmitting elements 7, 8, 9 to the coupling element 5 in the reverse direction of the rotation of axle 2, causing it to slip freely in coupling element 5 relative to the output axle 3, without causing it to change the direction of rotation.

When the input axle 2 rotates in the other direction (counterclockwise), the coupling element 6 starts the free sliding relative to the output axle 3, and the rotational movement is transmitted via pairs of rotation transmission elements 7, 8, 9 to the coupling element 5, which engages with the output axle 3. Thus, the output axle 3 rotates in the same direction as during the previous cycle, that is clockwise.

The input axles 2 and 4 have common properties allowing reciprocating rotary motion to be passed onto the output axle 3 in order to obtain its rotation in one direction.

Due to the construction of the device, the output axle 3 is able to rotate freely in a given direction regardless of the direction of rotation of the input axles 2, 4, even if they are immovable. When using the element accumulating the energy of rotation - the flywheel mounted on the output axle 3, the input axles 2 and 4 will transmit the rotation to the output axle 3 only when their speed is greater than or equal to the speed of rotation of the output axle 3.

The output axle 3 cannot rotate in a direction reverse to the given one, since the coupling elements 5 and 6 will engage with the rotation transmission element 7 and the input axle 2, forcing the rotation element 8 to rotate simultaneously in opposite direction, which leads to deadlock of the output axle 3. This is a positive feature in, for example, lifting devices since it does not allow the load to fall down. Bevel gears, or couples working on the force of friction, can be used in as rotation transmitting elements 7, 8, 9.

The claimed device for converting reciprocating rotary motion to unidirectional rotation movement may be used, for example, in lifting devices, electric power generators, machine-tools, pumps, and transport facilities.

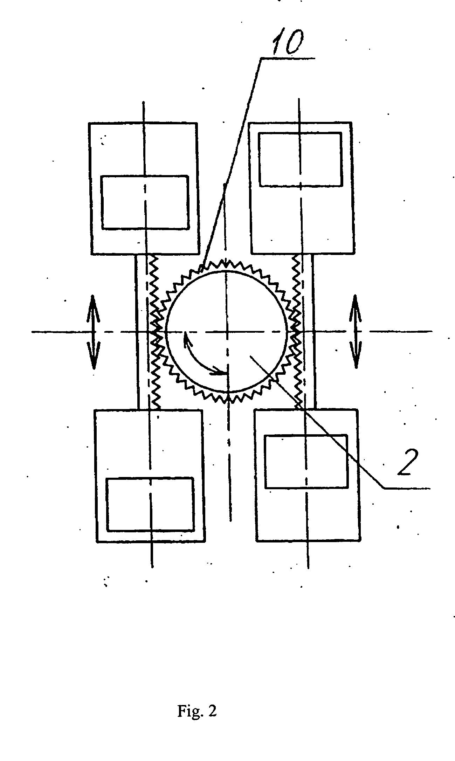

This device can entirely replace the crank-and-rod mechanism used in engines, which results in dead points, and the applied force in which is directed to bend the axis of the crank axle rather than rotating, thereby significantly reducing the efficiency factor of a crank mechanism. The increase of power capacity, overall dimensions, and economical efficiency is achieved using the claimed device in internal combustion engines (Fig. 2), due to the application of force of the reciprocal motion of the piston tangential to the gear 10 mounted on the input axle 2 of the claimed device, thereby eliminating the upper dead point in the crank mechanism in which the pressure of the pushing gases is directed initially to bending the crank axle necks.

The advantages achieved with the use of the claimed technical solution are as follows:
- a device is created that converts the rotation in any direction with an unlimited angle of rotation of the input axle into rotation of the output axle in one direction with the same angular velocity,
- increase in performance efficiency of the device,
- increase in functionalities.

### Industrial utility

The claimed invention can be used in lifting devices, electric power generation devices, machine-tools, pumps, transport facilities, particularly in internal-combustion engines.

## Claims

1. A device for converting reciprocating rotary motion into rotation motion, comprising
- a body (1) with input and output axles (2, 3),
- at least one intermediate axle (4) installed in the body (1) perpendicular to the input axle (2);
- at least two rotation transmitting coupling elements (5, 6) carried out as a free-wheel clutch or ratchet clutch rigidly mounted on the output axle (3) with the possibility of mutually reverse rotational action; and
- at least three rotation transmitting elements (7, 8, 9) interconnected among themselves and rigidly mounted between the coupling elements (5, 6) so as also be capable of mutually reverse rotation for transmitting the rotation of output axle (3) in one direction
**characterized in that** the input axle (2) is located on the same axis as the output axle (3), wherein the input axle (2) is rigidly mounted on the coupling element (6).

2. The device of claim 1, **characterized in that** the one of the rotation transmitting elements (8) is rigidly mounted on the intermediate axle (4) and two other rotation transmitting elements (7, 9) are rigidly interconnected with coupling elements (5, 6).

3. The device of claim 1, **characterized in that** the rotation transmission elements (7, 8, 9) are carried out as conical gear.

4. The device of claim 1, **characterized in that** shafts are used as the input, output and intermediate axles (2, 3, 4).

## Patentansprüche

1. Vorrichtung zum Umwandeln einer sich hin- und herbewegenden Drehbewegung in eine Rotationsbewegung, umfassend
- einen Körper (1) mit Eingangs- und Ausgangsachsen (2, 3);
- mindestens eine Zwischenachse (4), die senkrecht zur Eingangsachse (2) im Körper (1) angebracht ist;
- mindestens zwei rotationsübertragende Kupplungselemente (5, 6), die als eine Freilauf-Kupplung oder als Klinkenkupplung realisiert sind, die fest an der Ausgangssachse (3) montiert sind mit der Möglichkeit einer gegenseitig umgekehrten Drehwirkung, und
- mindestens drei rotationsübertragende Elemente (7, 8, 9), die untereinander verbunden sind und fest zwischen den Kupplungselementen (5, 6) so montiert sind, dass sie zu einer gegenseitig umgekehrten Drehung zum Übertragen der Rotation auf die Ausgangsachse (3) in eine Richtung fähig sind,
**dadurch gekennzeichnet, dass** die Eingangsachse (2) sich auf derselben Achse befindet wie die Ausgangsachse (3), wobei die Eingangsachse (2) fest an dem Kupplungselement (6) montiert ist.

2. Vorrichtung aus Anspruch 1, **dadurch gekennzeichnet, dass** das eine der rotationsübertragenden Elemente (8) fest auf der Zwischenachse (4) montiert ist und dass zwei andere rotationsübertragende Elemente (7, 8) fest mit den Kupplungselementen (5, 6) verbunden sind.

3. Vorrichtung aus Anspruch 1, **dadurch gekennzeichnet, dass** die rotationsübertragenden Elemente (7, 8, 9) als Kegelräder ausgeführt sind.

4. Vorrichtung aus Anspruch 1, **dadurch gekennzeichnet, dass** Wellen als Eingangs-, Ausgangs- und Zwischenachsen (2, 3, 4) verwendet werden.

## Revendications

1. Dispositif pour convertir un mouvement rotatif alternatif en un mouvement de rotation, comprenant :
- un corps (1) avec des arbres d'entrée et de sortie (2, 3),
- au moins un arbre intermédiaire (4) installé dans le corps (1) perpendiculaire à l'arbre d'entrée (2) ;
- au moins deux éléments d'accouplement de transmission de rotation (5, 6) réalisés sous la forme d'un embrayage à roue libre ou d'un embrayage à cliquet montés de façon rigide sur l'arbre de sortie (3) avec la possibilité d'une action de rotation mutuellement inverse ; et
- au moins trois éléments de transmission de rotation (7, 8, 9) reliés entre eux et montés de façon rigide entre les éléments d'accouplement (5, 6) de manière à être aussi capables d'une rotation mutuellement inverse pour transmettre la rotation de l'arbre de sortie (3) dans une direction,
**caractérisé en ce que** l'arbre d'entrée (2) est situé sur le même axe que l'arbre de sortie (3), et dans lequel l'arbre d'entrée (2) est monté de façon rigide sur l'élément d'accouplement (6).

2. Dispositif selon la revendication 1, **caractérisé en ce que** l'un des éléments de transmission de rotation (8) est monté de façon rigide sur l'arbre intermédiaire (4) et deux autres éléments de rotation de transmission (7, 9) sont reliés rigidement à des éléments d'accouplement (5, 6).

3. Dispositif selon la revendication 1, **caractérisé en ce que** les éléments de transmission de rotation (7, 8, 9) sont réalisés sous la forme d'un engrenage conique.

4. Dispositif selon la revendication 1, **caractérisé en ce que** des arbres sont utilisés en tant qu'arbres d'entrée, de sortie et intermédiaires (2, 3, 4).
